# EUROPEAN PATENT SPECIFICATION

(11) **EP 2 378 385 B1**
(45) Date of publication and mention of the grant of the patent: **29.10.2014**
(21) Application number: 08879143.9
(22) Date of filing: 25.12.2008
(51) Int. Cl.: G05G 1/50, B60T 7/06, B60T 11/18, G05G 1/30, G05G 1/44

(54) **LINK CONNECTION STRUCTURE OF OPERATION PEDAL DEVICE FOR VEHICLE**
LENKERVERBINDUNGSAUFBAU EINER BETÄTIGUNGSPEDALVORRICHTUNG
STRUCTURE DE LIAISON PAR BIELLES D'UN DISPOSITIF DE PÉDALE DE COMMANDE POUR VÉHICULE

(43) Date of publication of application: 19.10.2011
(73) Proprietor: Toyoda Iron Works Co., Ltd., Toyota-shi Aichi 471-8507 (JP)
(72) Inventor: SUGIURA, Hikaru, Toyota-shi Aichi 471-8507 (JP); YAGI, Isao, Toyota-shi Aichi 471-8507 (JP); KOHAMA, Shuji, Toyota-shi Aichi 471-8507 (JP)
(74) Representative: TBK
(86) International application number: PCT/JP2008/073637
(87) International publication number: WO 2010/073347

(56) References cited:
- EP-A2- 1 724 170
- DE-A1- 4 013 284
- JP-A- 1 034 531
- JP-A- 9 112 559
- JP-A- 11 115 699
- JP-A- 411 115 699
- JP-B2- 2 634 413
- US-A- 3 911 760
- US-A- 4 354 298
- US-A1- 2002 088 303

## Description

### FIELD OF THE INVENTION

The present invention relates to a link connecting structure of an operating pedal device for a vehicle, and particularly relates to the link connecting structure that can be constructed with a small number of components at low cost.

### DESCRIPTION OF THE RELATED ART

A known operating pedal device for a vehicle comprises (a) an operating pedal that is pivotally mounted about a first axis and is operated to be depressed by a driver, and (b) a pivot member that is pivotally mounted about a second axis parallel to the first axis and is connected to the operating pedal through connecting links to mechanically pivot about the second axis in accordance with the depressing operation of the operating pedal. In such an operating pedal device for a vehicle, (c) a pair of connecting sections are disposed to pivotably connect the connecting links relative to the operating pedal and the pivot member. In at least one of the connecting sections, a connecting pin having a large-diameter head at one axial end is disposed such that a cylindrical shaft thereof passes through the connecting sections. Disengagement-preventing portions formed at tip portions of the connecting pins protruded from the connecting sections oppositely prevent the connecting pins from disengaging to a side of the large-diameter heads. Patent Document 1 and Patent Document 2 describe examples of such operating pedal devices for a vehicle, to which E rings or β pins are applied as the disengagement-preventing portion. Further, Patent Document 3 describes a connecting structure of a supporting portion for pivotally attaching an operating pedal for a vehicle to a bracket, in which a tip portion of a supporting pin is caulked and integrally fixed to the bracket.
Patent Document 1: JP-A-2002-283976
Patent Document 2 : JP-A-11-115699
Patent Document 3: JP-U-01-123727

### DISCLOSURE OF THE INVENTION

### SUBJECT TO BE SOLVED BY THE INVENTION

However, the above-mentioned methods that use the E rings or the β pins as the disengagement-preventing portion require a larger number of members. In addition, slots for applying the E rings or holes to allow the β pins to pass therethrough have to be formed in the shafts of the connecting pins, which increase a manufacturing cost. Further, application of the E rings or the β pins, which is hard to automate, is performed manually. Thus, the manufacturing cost is further increased.

On the other hand, the caulking as described in Patent Document 3 may be employed to prevent the connecting pin from disengaging. However, since the caulking is generally a technique of upset forging the connecting pin with leaving no gap, it is necessary to use a stepped connecting pin or to interpose a collar, for connecting members in a relatively pivotable manner. Thus, sufficient effects in decreasing the number of the members or reducing the manufacturing cost cannot necessarily be obtained.

The present invention was accomplished considering the above circumstances, and has an object to construct a link connecting sections of an operating pedal device for a vehicle in which a plurality of members are connected by a connecting pin in a relatively pivotable manner, with a small number of components at low cost.

### SUMMARY OF THE INVENTION

To achieve the purpose, a first aspect of the present invention provides a link connecting structure of an operating pedal device for a vehicle, the operating pedal device comprising (a) an operating pedal that is pivotally mounted about a first axis and is operated to be depressed by a driver, and (b) a pivot member that is pivotally mounted about a second axis parallel to the first axis and is connected to the operating pedal through a connecting link to be mechanically pivoted about the second axis in accordance with a depressing operation of the operating pedal, (c) the link connecting structure including a pair of connecting sections in which the connecting link is pivotably connected relative to the operating pedal and the pivot member, in at least one of the connecting sections, the connecting pin that has a large-diameter head at one axial end being disposed such that a cylindrical shaft thereof passes through the connecting section, and a disengagement-preventing portion that is formed at a tip portion of the connecting pin protruded from the connecting section oppositely preventing the connecting pin from disengaging to a side of the large-diameter head, being characterized in that (d) with the shaft passing through the connecting section, the tip end is crushed into an axial direction by a plastic deformation to have a larger diameter than an initial diameter of the shaft to form the disengagement-preventing portion, and (e) with the connecting section to the large-diameter head being closely attached to one another, a predetermined gap is formed between the connecting section and the disengagement-preventing portion as to allow relative pivoting at the connecting section.

A second aspect of the present invention is, in the link connecting structure of an operating pedal device for a vehicle of the first aspect, that (a) a pair of connecting links are mounted on both sides of the operating pedal and the pivot member with putting the operating pedal and the pivot member therebetween, and (b) the shaft of the connecting pin has a larger diameter at a portion near the large-diameter head to be integrally press-fitted into one of the pair of the connecting links positioned on a side of the large-diameter head.

### EFFECT OF THE INVENTION

In a link connecting structure of an operating pedal device for a vehicle, with the shaft(s) of the connecting pins passing through the connecting section(s), the tip portion(s) thereof is subjected to a plastic deformation processing such as a roll caulking or like. As a result, the tip end is increased in a diameter by a plastic deformation to form a disengagement-preventing portion, with the connecting section to the large-diameter head being closely attached to one another, such that a predetermined gap is formed between the connecting section and the disengagement-preventing portion. Accordingly, unlike the conventional ordinary caulking, owing to presence of the gap, a relative pivotal movement of the members at the connecting section is allowed.

According to the present invention, just the plastic deformation of the tip portion of the shaft connects the members at the connecting section without hindering the relative pivotal movement thereof. Therefore, a process to form the disengagement-preventing portion, i.e., the plastic deformation processing, for the connecting pin, can be easily automated. Further, since a member for a disengagement-prevention such as the E ring or the like is not required, a slot or the like for applying the member does not have to be formed. As a result, the low-cost structure with a small number of members can be achieved.

According to the second aspect of the present invention, the shaft of the connecting pin has a large diameter at the portion near the large-diameter head, and the large-diameter portion is integrally press-fitted into the connecting link positioned on a side of the large-diameter head. Accordingly, when the shaft of the connecting pin is plastically deformed at the tip end thereof, even if a component force is generated in a transverse direction relative to the axis of the shaft, the connecting pin can be positioned easily with high accuracy through the connecting link.

### BRIEF DESCRIPTION OF THE DRAWINGS

FIG. 1 is a diagram showing a front view of a brake pedal device for a service braking of a vehicle, to which the present invention is applied;
FIG. 2 is a diagram showing an enlarged view of a II-II section in FIG. 1;
FIG. 3 is a schematic diagram explaining a roll caulking apparatus used to perform a roll caulking on a connecting pin that is disposed in on a link connecting section of the brake pedal device of FIG. 1; and
FIG. 4 is a diagram comparatively showing states before and after a large-diameter disengagement-preventing portion is formed at the tip portion of a connecting pin using the roll caulking apparatus of FIG. 3.

### EXPLANATION OF REFERENCES

10 : brake pedal device (operating pedal device for vehicle) 14 : operating pedal 18 : pivot member 20a, 20b : connecting link 34, 36 : connecting section 38, 40 : connecting pin 42 : large-diameter head 44 : shaft 46 : disengagement-preventing portion 60: roll caulking apparatus O₁: first axis O₂ : second axis ρ : gap D₀ : initial diameter of the shaft D_{A} : maximum diameter of the disengagement-preventing portion

### BEST MODE FOR CARRYING OUT THE INVENTION

The present invention is preferably applied to a connecting part of a connecting link of an operating pedal device for a vehicle such as a brake pedal for service brake device, a parking brake device, an accelerator pedal, a clutch pedal, or the like. To the pivot member, a push rod of a brake master cylinder, an accelerator cable, or the like is connected. A predetermined reaction force is applied to the pivot member according to depressing strokes using a simulation device provided with a biasing means such as a spring. Thus, various embodiments are applicable.

With respect to the connecting link(s) that connects the operating pedal and the pivot member, a pair of connecting links are preferably provided on both sides of the operating pedal and the pivot member, as in the second aspect of the present invention. However, one connecting link may be provided on one side. According to the second aspect of the present invention, the connecting pin is press-fitted into one connecting link. However, in carrying out the first aspect of the present invention, the connecting pin does not necessarily have to be press-fitted into the connecting link, but may also pass therethrough in a relatively pivotable manner.

As a processing means for crushing the tip portion of the shaft of the connecting pin in the axial direction to be plastically deformed, a roll caulking is preferably employed, for example. The roll caulking is performed using a spin head mounted concentrically with an axis of the connecting pin and a punch provided inclined to the axis of the spin head. By rotating the spin head about its axis the punch performs a precession (the precession is also called conical movement). The punch is, with performing the precession, moved in the axial direction by an air cylinder or the like, and is pressed against the tip of the shaft of the connecting pin to plastically deform the tip. Because of a small contact area between the punch and the shaft, the caulking process is performed on the tip of the shaft with causing a local plastic deformation thereof. Therefore, only the tip portion of the shaft can be plastically deformed locally to increase the diameter thereof, without deforming other parts of the shaft. Accordingly, a disengagement-preventing portion (large-diameter portion) can be formed such that a predetermined gap is formed between the disengagement-preventing portion and the connecting section. As materials for the connecting pin, plastically deformable metal materials are employed. One punch may be provided, but it is also acceptable to provide a pair of punches symmetrically about the axis or to provide three or more punches. The punch(s) is preferably mounted rotatably about its own axis. In addition to the roll caulking, other processing method such as a press caulking is also applicable as long as such other processing method can plastically deform only the tip portion of the shaft of the connecting pin locally to increase the diameter thereof without deforming other parts of the shaft.

When the roll caulking is performed as the plastic deformation processing, a component force is generated in a transverse direction relative to the axis of the shaft of the connecting pin to which the roll caulking is performed. In order to deal with such component force, the connecting pin is preferably positioned to be prevented from a falling or a rattling thereof during formation of a disengagement-preventing portion by the roll caulking, for example by press-fitting the connecting pin into one connecting link integrally, as in the second aspect of the present invention.

The maximum diameter D_{A} of the disengagement-preventing portion (large-diameter portion) formed by the plastic deformation processing such as the roll caulking is suitably determined as follows. That is, the maximum diameter D_{A} is determined within a range such that the disengagement-preventing portion cannot be disengaged from a connecting pin through hole provided in the connecting link, the operating pedal, or the connecting section of the pivot member. For example, in the case where the initial diameter Do of the shaft is approximately the same as the diameter of the connecting pin through hole, by selecting the maximum diameter D_{A} of the disengagement-preventing portion not less than 1.02 times of the initial diameter Do of the shaft (D_{A}=1.02 x Do), the disengagement-preventing load which is comparable to that in the conventional case of using an E ring as a disengagement preventing means can be obtained.

With the connecting section to the large-diameter head being closely attached to one another, a gap is formed between the connecting section and the disengagement-preventing portion. The gap, that is, a difference between (i) a dimension between the disengagement-preventing portion and the large-diameter head (dimension of the shaft), and (ii) a dimension of a plate thickness of the entire connecting section (sum of connecting link and operating pedal, or sum of connecting link and pivot member) is defines as p. The gap p is suitably set so as not to hinder the relative pivoting at the connecting section and also not to give excessive freeplay that would cause rattling or prying thereat to the connecting section. The suitable range of the gap is, for example, more than zero and not more than 6.0mm (0 mm < ρ ≤ 6.0 mm), although this depends on the material of the connecting pin, and the like.

The disengagement-preventing portion is formed by the plastic deformation processing, with the connecting section to the large-diameter head being closely attached to one another, such that a predetermined gap p is formed between the disengagement-preventing portion and the connecting section. However, during the plastic deformation processing, the connecting section to the large-diameter head do not necessarily have to be closely attached to one another. That is, it is sufficient that the dimension between the disengagement-preventing portion and the large-diameter head (dimension of the shaft) is eventually larger than the dimension of the plate thickness of the entire connecting section by the dimension of the gap p. For example, when a predetermined space is present between the large-diameter head and the connecting section during the plastic deformation processing, the plastic deformation processing may be performed such that a gap, which has a dimension obtained by subtracting a dimension of the predetermined space from a dimension of the gap ρ, is formed between the disengagement-preventing portion and the connecting section. The roll caulking may also be performed under presence of a space existed between the members forming the connecting section.

### EMBODIMENT

Hereafter, an embodiment of the present invention is described in detail with reference to the drawings.

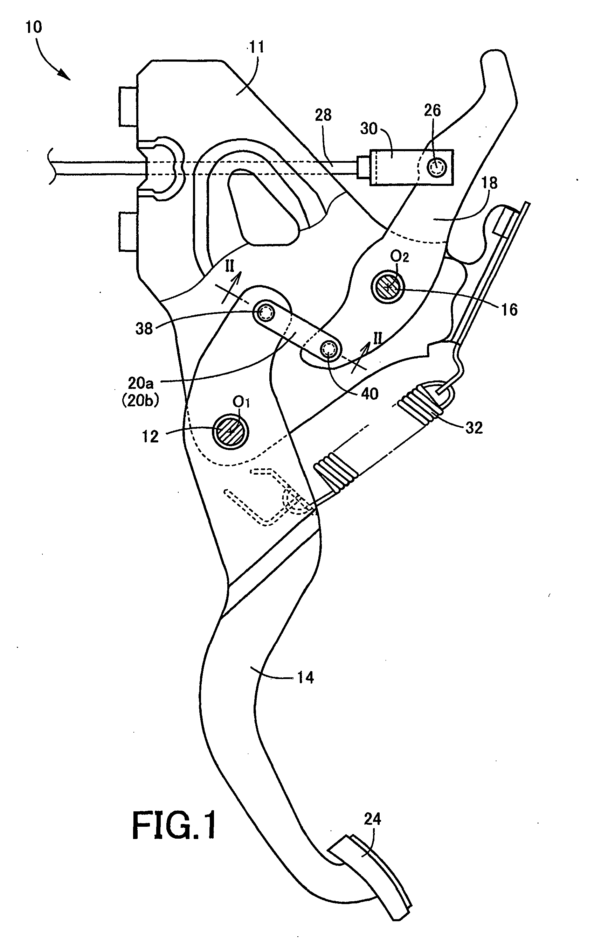

FIG. 1 is a diagram showing a front view of a brake pedal device 10 for a service braking of a vehicle to which the present invention is applied. In FIG.1, on a pedal support 11 that is integrally fixed to a vehicle, an operating pedal 14 is pivotally mounted about an axis O₁ of a substantially horizontal first supporting axis 12, and a pivot member 18 is mounted pivotally about an axis O₂ of a second supporting shaft 16 substantially parallel to the axis O₁. Astride the operating pedal 14 and the pivot member 18, a pair of connecting links 20a and 20b are mounted on the opposite sides of the operating pedal 14 and the pivot member 18 (front and back sides of a sheet of FIG.1). The axis O₁ of the first supporting shaft 12 corresponds to a claimed first axis, and the axis O₂ of the second supporting shaft 16 corresponds to a claimed second axis. In FIG. 1, in order to clearly show a connecting part by the connecting links 20a and 20b, a side plate of the pedal support 11 positioned on this side is partially cut away.

When a pedal sheet 24 provided at the lower end of the operating pedal 14 is depressed by a driver, the operating pedal 14 is caused to pivot in the clockwise direction in FIG. 1 about the first supporting shaft 12. Through the connecting links 20a and 20b connected at the upper end portion of the operating pedal 14, the pivotal movement of the operating pedal 14 causes the pivot member 18 to mechanically pivot in the counterclockwise direction about the second supporting shaft 16. A push rod 28 of a brake master cylinder is connected to an upper end portion of the pivot member 18 through a clevis 30 in relatively pivotable manner about the axis of a connecting pin 26 that is substantially parallel to the second supporting shaft 16. With the pivotal movement of the pivot member 18, the push rod 28 is mechanically pressed leftward in FIG.1. In this manner, an oil pressure for a hydraulic brake is generated according to the depressing operation force on the operating pedal 14. The push rod 28 is biased in a direction projecting from the brake master cylinder, and a return spring 32 is tensioned between the operating pedal 14 and the pedal support 11. Accordingly, when the pedal sheet 24 is released from the depressing operation, the biasing force causes the pivot member 18 to pivot reversely in the clockwise direction about the axis O₂ of the second supporting shaft 16, and the operating pedal 14 to pivot about the axis O₁ of the first supporting shaft 12 reversely in the counterclockwise direction. Thus, the operating pedal 14 and the pivot member 18 are maintained at the original position shown in FIG. 1.

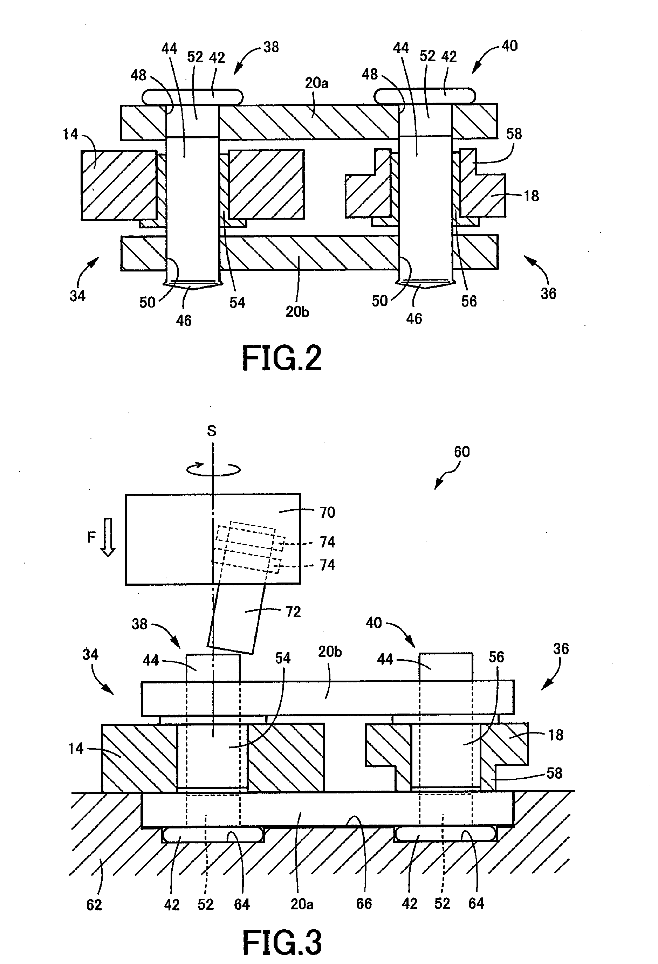

FIG. 2 is an enlarged sectional view showing a II-II section in FIG.1. In FIG. 2, the connecting links 20a and 20b that connect the operating pedal 14 and the pivot member 18 are mounted on the both sides thereof such that the operating pedal 14 and the pivot member 18 are put between the connecting links 20a and 20b. At a connecting section 34 between the connecting links 20a, 20b and the operating pedal 14, as well as at a connecting section 36 between the connecting links 20a, 20b and the pivot member 18, the connecting links 20a, 20b and the operating member 14, as well as the connecting links 20a, 20b and the pivot member 18 are connected by the connecting pins 38 and 40 respectively in a relatively pivotable manner. The connecting pins 38 and 40 have the same structure in each of which a large-diamter head 42 and a cylindrical shaft 44 are provided coaxially and integrally, and they are disposed such that the respective shafts 44 pass through the connecting sections 34 and 36. At respective tip ends of the connecting pins 38 and 40 protruding from the connecting sections 34 and 36 oppositely (downwardly in FIG.2), disengagement preventing portions 46 are formed to prevent the connecting pins 38 and 40 from falling off to a side of the large-diameter heads 42.

A connecting link 20a has connecting pin through holes 48, and a connecting link 20b has connecting pin through holes 50 respectively formed therein. The connecting pin through holes 48 and 50 have inner diameters substantially equal to an outer diameter of the shafts 44, through which the shaft 44 is passed. At a portion of the shaft 44 positioned near the large-diameter head 42, a press-fitting portion 52 having a slightly larger diameter than other parts of the shaft 44 is provided, and being integrally press-fitted into the connecting link 20a. The shaft 44 has a constant diameter at other parts than the press-fitting portion 52 to pass through the connecting pin through hole 50 of the connecting link 20b in a relatively pivotable manner. Further, metal bushes 54 and 56 are disposed between the operating pedal 14 and the shaft 44 of the connecting pin 38, and between the pivot member 18 and the shaft 44 of the connecting pin 40, respectively. At the connecting section of the pivot member 18, a boss 58 is integrally provided for preventing rattling due to a difference in a plate thickness between the pivot member 18 and the operating pedal 14.

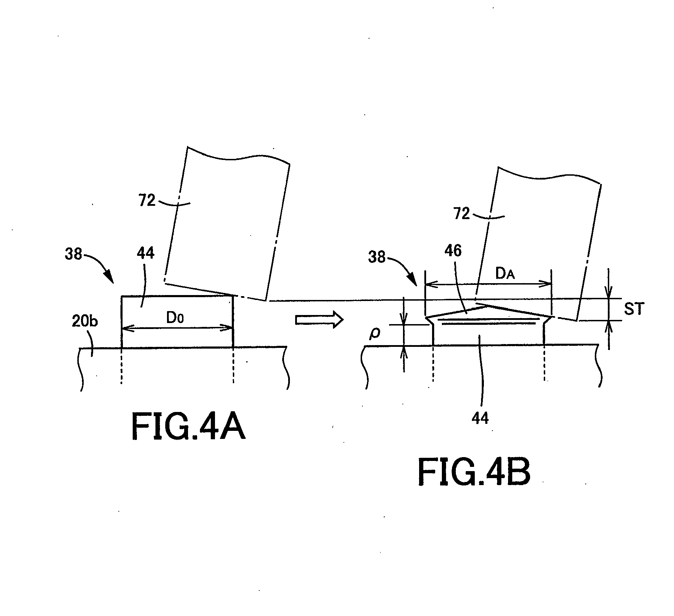

The disengagement-preventing portions 46 herein are formed, with the shafts 44 passing through the connecting sections 34 and 36, by plastically deforming the tip portions to be crushed in the axial direction of the connecting pins 38 and 40. Each of the disengagement-preventing portions 46 thus formed is a large-diameter portion having a larger diameter than an initial diameter Do of the shaft 44. Further, the disengagement-preventing portions 46 are formed by a roll caulking, with the connecting sections 34 and 36 to the large-diameter heads 42 being closely attached to one another (see FIG. 3), such that a predetermined gap ρ (see FIG. 4B) is formed between the disengagement-preventing portion 46 and the connecting section 34 or 36. Owing to presence of the gap ρ, a relative pivotal movement of the members at the connecting sections 34 and 36 is allowed.

FIG. 3 is a schematic diagram explaining a roll caulking apparatus 60 used to perform the roll caulking, and shows a state before the disengagement-preventing portion 46 is formed. One connecting link 20a into which the connecting pins 38 and 40 are press-fitted is mounted on a positioning jig 62 such that the shafts 44 of the connecting pins 38 and 40 are directed upwards. On an upper surface of the positioning jig 62, a pair of supporting recesses 64 and a positioning recess 66 are provided. On the pair of supporting recesses 64, the large-diameter heads 42 of the connecting pins 38 and 40 are mounted to be contact therewith. The positioning recess 66 accommodates the connecting link 20a and sets the position thereof in the horizontal direction. The operating pedal 14 and the pivot member 18, together with the metal bushes 54 and 56, are mounted downwardly on the shafts 44 of the connecting pins 38 and 40 facing upwards, respectively. The other connecting link 20b is further mounted on the operating pedal 14, the pivot member 18 and the like. With such a state, the connecting link 20b and other members are pressed against the positioning jig 62 by a non-illustrated clamp to be integrally fixed.

A spin head 70 and a punch 72 are disposed above the positioning jig 62. The spin head 70 is rotated by a rotation drive unit such as motor about the axis S extended in the vertical direction. The punch 72 is provided on the spin head 70 to be inclined at a predetermined angle relative to the axis S. The punch 72 is mounted on the spin head 70 by a bearing 74 rotatably about its own axis. When the spin head 70 is rotated about the axis S, the punch 72 performs a precession (the precession is also referred to as a conical movement) about the axis S. Then, at the position where the axis S substantially coincides with the axis of one connecting pin 38, the spin head 70 is, with rotating, moved downward by a non-illustrated pressing device such as air cylinder under a predetermined press load F. Consequently, the punch 72 is pressed onto the tip of the shaft 44 of the connecting pin 38 in an inclined posture, and it performs the precession about the axis S, with rotating about its own axis by friction. Accordingly, as shown in FIG. 4A and FIG. 4B, the tip portion of the shaft 44, which is plastically deformed to be crushed in the axial direction, forms the disengagement-preventing portion 46.

According to the roll caulking, owing to a small contact area between the punch 72 and the shaft 44, the caulking proceeds with causing a local plastic deformation on the tip of the shaft 44. Therefore, only the tip portion of the shaft 44 can be plastically deformed locally to increase the diameter thereof, without deforming other parts of the shaft 44. In this way, as shown in FIG 3, with the members of the connecting section 34 being closely attached to one another and with the members being closely attached to the large-diameter head 42, the rolling caulking can be performed such that a predetermined gap ρ is formed between the upper surface of the connecting link 20b positioned uppermost the connecting section 34 and the disengagement-preventing portion 46, as shown in FIG. 4B. Owing to presence of the gap p, the relative pivotal movement of the members is allowed at the connecting section 34. The gap, that is, a difference between a dimension between the disengagement-preventing portion 46 and the large-diameter head 42 (dimension of the shaft 44), and a dimension of a plate thickness of the entire connecting section 34 is suitably determined from the following viewpoints. Specifically, the dimension is determined such that (i) the relative pivotal movement at the connecting section 34 is not hindered and the depressing operation properties of the operating pedal 14 is not impaired; (ii) during the roll caulking, the shaft 44 of the connecting pin 38 is not
deformed or perpendicularity of the connecting pin 38 relative to the connecting link 20a is not deteriorated, and the mountability of the connecting link 20b is not impaired; and (iii) the rattling of the members or prying thereby resulted from excessive freeplay is not caused. The suitable range of the gap is 0 mm < ρ ≤ 6.0 mm, for example. In the present embodiment, considering errors in an installation, a strength during the operation and the like, the dimension is set within a range of 0.4 mm ≤ ρ ≤ 4.0 mm. The maximum diameter D_{A} of the disengagement-preventing portion 46 formed by the roll caulking is suitably set within the range such that the disengagement-preventing portion 46 does not disengage from the connecting pin through hole 50 provided in the connecting link 20b. For example, by setting the maximum diameter D_{A} not less than 1.02 Do relative to the initial diameter Do of the shaft 44, the disengagement preventing load can be obtained which is comparable to that in the conventional case of using the E ring. A processing stroke ST of the spin head 70 is set such that a disengagement-preventing portion 46 having such a maximum diameter D_{A} is obtained, and the initial axial length of the shaft 44 is set according to the processing stroke ST such that the gap p is formed.

After completion of the roll caulking on the tip of the shaft 44 of one connecting pin 38, the roll caulking is performed on the tip of the shaft 44 of the other connecting pin 40 to form the disengagement-preventing portion 46 in the same manner. Meanwhile, the roll caulking may be performed on the connecting pins 38 and 40 simultaneously by a pair of spin heads 70 disposed in a distance corresponding to the distance between the pair of connecting pins 38 and 40.

In the link connecting structure of the brake pedal device of the present embodiment, with the shafts 44 of the connecting pins 38 and 40 passing through the connecting sections 34 and 36, the tip portions thereof are subjected to the plastic deformation processing. As a result, the tip ends are increased in a diameter by the plastic deformation to form the disengagement-preventing portion 46, such that the gap ρ is formed between the connecting sections 34 and 36, and the disengagement-preventing portion in a state in which the connecting sections 34 and 36 to the large-diameter head 42 are closely attached to one another. Accordingly, unlike the conventional ordinary caulking, owing to presence of the gap, the relative pivotal movement of the members at the connecting sections 34 and 36 is allowed. Thus, the disengagement-preventing process, that is the roll caulking, of the connecting pins 38 and 40 can be easily automated. Further, the disengagement-preventing member such as the E ring is not required, and a slot or the like for installing the disengagement-preventing members on the shafts 44 of the connecting pins 38 and 40 does not have to be formed. Accordingly, the link connecting structure can be constructed with a small number of members at low cost. The roll caulking can be easily automated, for example, by performing the roll caulking with the NC control or the like based on a processing stroke ST which is preset.

Further, in the roll caulking, because the component force is generated in the transverse direction relative to the axes of the shafts 44 of the connecting pins 38 and 40 to which the roll caulking is performed, the connecting pins 38 and 40 have to be positioned not to cause the falling or rattling thereof. In the present embodiment, the large-diameter press-fitting portions 52 are provided at the portions of the shafts 44 of the connecting pins 38 and 40 positioned near the large-diameter heads 42, and they are integrally press-fitted into the connecting link 20a that is positioned on a side of the large-diameter head 42. Accordingly, positioning of the connecting pins 38 and 40 during the roll caulking on the tip portions of the shafts 44 can be easily performed through the connecting link 20a with high accuracy. In the present embodiment, the large-diameter heads 42 are mounted on the positioning jig 62 to be in contact with the upper surface of the supporting recess 64. The connecting link 20a is positioned by the positioning recess 66 in the horizontal direction. The other connecting link 20b is mounted on the operating pedal 14, the pivot member 18 and the like. With such a state, the members are integrally fixed to the positioning jig 62 by a non-illustrated clamp. Accordingly, the roll caulking can be properly performed with positioning the shaft 44 in a fixed and substantially perpendicular posture under existence of the component force in the transverse direction.

One embodiment of the present invention was explained in detail based on the drawings. However, this is merely one embodying mode of the present invention, and the present invention can be carried out with adding various modifications and improvements based on the knowledge of those skilled in the art.

## Claims

1. A link connecting structure of an operating pedal device for a vehicle,
the operating pedal device (10) comprising an operating pedal (14) that is pivotally mounted about a first axis (O₁) and is operated to be depressed by a driver, and a pivot member (18) that is pivotally mounted about a second axis (O₂) parallel to the first axis and is connected to the operating pedal through a connecting link (20a, 20b) to mechanically pivot about the second axis in accordance with a depressing operation of the operating pedal,
the link connecting structure including a pair of connecting sections (34, 36) in which the connecting link (20a, 20b) is pivotably connected relative to the operating pedal (14) and the pivot member (18); in at least one of the connecting sections, the connecting pin (38, 40) that has a large-diameter head (42) at one axial end being disposed such that a cylindrical shaft (44) thereof passes through the connecting section; and a disengagement-preventing portion (46) that is formed at a tip portion of the connecting pin protruded from the connecting section oppositely preventing the connecting pin from disengaging to a side of the large-diameter head,
being **characterized in that** with the shaft (44) passing through the connecting section (34, 36), the tip portion is crushed into an axial direction by roll caulking causing a plastic deformation to have a larger diameter than an initial diameter (D₀) of the shaft to form the disengagement-preventing portion (46), and
with the connecting section (34, 36) to the large-diameter head (42) being closely attached to one another, a predetermined gap (ρ) is formed between the connecting section and the disengagement-preventing portion (46) as to allow relative pivoting at the connecting section.

2. The link connecting structure of an operating pedal device for a vehicle according to claim 1, wherein a pair of connecting links (20a, 20b) are mounted on both sides of the operating pedal (14) and the pivot member (18) with putting the operating pedal and the pivot member therebetween, and the shaft (44) of the connecting pin (38, 40) has a larger diameter at a portion (52) positioned near the large-diameter head (42) to be integrally press-fitted into one of the pair of the connecting links (20a) positioned on a side of the large-diameter head.

3. The link connecting structure of an operating pedal device for a vehicle according to claim 1, wherein a maximum diameter of the disengagement-preventing portion is selected to be not less than 1.02 times of an initial diameter of the shaft.

4. The link connecting structure of an operating pedal device for a vehicle according to claim 1, wherein the gap (ρ) formed between the connecting section (34, 36) and the disengagement-preventing portion (46) is more than zero and not more than 6.0 mm.

5. The link connecting structure of an operating pedal device for a vehicle according to claim 1, wherein the plastic deformation of the tip portion is performed by the roll caulking, wherein a punch (72) is pressed onto the tip portion of the shaft (44) of the connecting pin (38) in an inclined posture, and it performs a precession about an axis S of a spin head (70), with rotating about its own axis by friction.

## Patentansprüche

1. Lenkerverbindungsaufbau einer Betätigungspedalvorrichtung für ein Fahrzeug,
wobei die Betätigungspedalvorrichtung (10) ein Betätigungspedal (14), das um eine erste Achse (O₁) schwenkbar montiert ist und betätigbar ist, um durch einen Fahrer niedergedrückt zu sein, sowie ein Schwenkelement (18) hat, das um eine zweite Achse (O₂) schwenkbar montiert ist, die parallel zu der ersten Achse ist, und mit dem Betätigungspedal durch einen Verbindungslenker (20a, 20b) verbunden ist, um mechanisch um die zweite Achse in Übereinstimmung mit einer niederdrückenden Betätigung des Betätigungspedals zu schwenken,
wobei der Lenkerverbindungsaufbau ein Paar Verbindungspartien (34, 36), in denen der Verbindungslenker (20a, 20b) bezüglich des Betätigungspedals (14) und des Schwenkelements (18) schwenkbar verbunden ist; wobei in mindestens einer der Verbindungspartien der Verbindungsstift (38, 40), der an einem axialen Ende einen Kopf (42) großen Durchmessers hat, so angeordnet ist, dass sein zylindrischer Schaft (44) durch die Verbindungspartie verläuft; sowie einen das Lösen verhindernden Abschnitt (46) hat, der an einem Spitzenabschnitt des Verbindungsstiftes auf der gegenüberliegenden Seite aus der Verbindungspartie vorragend ausgebildet ist und verhindert, dass sich der Verbindungsstift zu einer Seite des Kopfes großen Durchmessers hin löst,
**dadurch gekennzeichnet, dass** beim Verlaufen des Schafts (44) durch die Verbindungspartie (34, 36) der Spitzenabschnitt in einer axialen Richtung durch Walzverstemmung gequetscht wird, wobei eine plastische Verformung verursacht wird, um einen größeren Durchmesser zu haben als einen Anfangsdurchmesser (D₀) des Schafts, um den das Lösen verhindernden Abschnitt (46) zu erzeugen, und
mit der dicht aneinander angebrachten Verbindungspartie (34, 36) und des Kopfes (42) großen Durchmessers eine vorgegebene Lücke (ρ) zwischen der Verbindungspartie und dem das Lösen verhindernden Abschnitt (46) ausgebildet ist, so dass relatives Schwenken an der Verbindungspartie ermöglicht wird.

2. Lenkerverbindungsaufbau einer Betätigungspedalvorrichtung für ein Fahrzeug nach Anspruch 1, wobei ein Paar Verbindungslenker (20a, 20b) an beiden Seiten des Betätigungspedals (14) und des Schwenkelements (18) montiert sind, wobei das Betätigungspedal und das Schwenkelement dazwischen gesetzt sind, und wobei der Schaft (44) des Verbindungsstiftes (38, 40) einen größeren Durchmesser in einem nahe des Kopfes (42) großen Durchmessers angeordneten Abschnitt (52) hat, um einstückig in einen von dem Paar Verbindungslenker (20a) eingepresst zu sein, der auf einer Seite des Kopfes großen Durchmessers angeordnet ist.

3. Lenkerverbindungsaufbau einer Betätigungspedalvorrichtung für ein Fahrzeug nach Anspruch 1, wobei ein Höchstdurchmesser des das Lösen verhindernden Abschnitts so definiert ist, dass er nicht kleiner ist als das 1,02-fache des Anfangsdurchmessers des Schafts.

4. Lenkerverbindungsaufbau einer Betätigungspedalvorrichtung für ein Fahrzeug nach Anspruch 1, wobei die zwischen der Verbindungspartie (34, 36) und dem das Lösen verhindernden Abschnitt (46) ausgebildete Lücke (p) größer als Null und nicht größer als 6,0 mm ist.

5. Lenkerverbindungsaufbau einer Betätigungspedalvorrichtung für ein Fahrzeug nach Anspruch 1, wobei die plastische Verformung des Spitzenabschnitts mittels der Walzverstemmung durchgeführt wird, wobei ein Stempel (72) auf den Spitzenabschnitt des Schafts (44) des Verbindungsstiftes (38) in einer geneigten Stellung gedrückt wird und eine Präzession um eine Achse S eines Spindelkopfes (70) vollführt, wobei er durch Reibung um seine eigene Achse dreht.

## Revendications

1. Structure de connexion de liaison d'un dispositif de pédale de commande pour un véhicule,
le dispositif de pédale de commande (10) comprenant une pédale de commande (14) qui est montée pivotant autour d'un premier axe (O₁) et est commandée pour être appuyée par un conducteur, et un élément de pivot (18) qui est monté pivotant autour d'un deuxième axe (O₂) parallèle au premier axe et est connecté à la pédale de commande à travers une liaison de connexion (20a, 20b) pour pivoter mécaniquement autour du deuxième axe conformément à une commande d'appui de la pédale de commande,
la structure de connexion de liaison incluant une paire de sections de connexion (34, 36) dans laquelle la liaison de connexion (20a, 20b) est connectée pivotant par rapport à la pédale de commande (14) et l'élément de pivot (18) ; dans au moins une des sections de connexion, la broche de connexion (38, 40) qui a une tête à large diamètre (42) à une extrémité axiale étant disposée de sorte qu'un arbre cylindrique (44) de celle-ci passe à travers la section de connexion ; et une partie empêchant le désengagement (46) qui est formée à une partie de pointe de la broche de connexion faisant saillie de la section de connexion à l'opposé empêchant la broche de connexion de se désengager à un côté de la tête à large diamètre,
étant **caractérisée en ce qu'**avec l'arbre (44) passant à travers la section de connexion (34, 36), la partie de pointe est écrasée dans une direction axiale par scellement par roulage causant une déformation plastique pour avoir un diamètre plus large qu'un diamètre initial (D₀) de l'arbre pour former la partie empêchant le désengagement (46), et
avec la section de connexion (34, 36) à la tête à large diamètre (42) étant étroitement attachée l'une à l'autre, un espace prédéterminé (ρ) est formé entre la section de connexion et la partie empêchant le désengagement (46) de manière à permettre un pivotement relatif à la section de connexion.

2. Structure de connexion de liaison d'un dispositif de pédale de commande pour un véhicule selon la revendication 1, dans laquelle une paire de liaisons de connexion (20a, 20b) est montée sur les deux côtés de la pédale de commande (14) et l'élément de pivot (18) avec la mise en place de la pédale de commande et de l'élément de pivot entre elles, et l'arbre (44) de la broche de connexion (38, 40) a un diamètre plus large à une partie (52) positionnée près de la tête à large diamètre (42) pour être intégralement emmanché à la presse dans une de la paire de liaisons de connexion (20a) positionnée sur un côté de la tête à large diamètre.

3. Structure de connexion de liaison d'un dispositif de pédale de commande pour un véhicule selon la revendication 1, dans laquelle un diamètre maximal de la partie empêchant le désengagement est choisi pour ne pas être inférieur à 1,02 fois un diamètre initial de l'arbre.

4. Structure de connexion de liaison d'un dispositif de pédale de commande pour un véhicule selon la revendication 1, dans laquelle l'espace (ρ) formé entre la section de connexion (34, 36) et la partie empêchant le désengagement (46) est supérieur à zéro et pas supérieur à 6,0 mm.

5. Structure de connexion de liaison d'un dispositif de pédale de commande pour un véhicule selon la revendication 1, dans laquelle la déformation plastique de la partie de pointe est réalisée par le scellement par roulage, dans lequel un poinçon (72) est appuyé sur la partie de pointe de l'arbre (44) de la broche de connexion (38) dans une posture inclinée, et il réalise une précession autour d'un axe S d'une tête de filage (70), avec une rotation autour de son propre axe par friction.
